Europäisches Patentamt

European Patent Office

Office européen des brevets

(19)

(11) Veröffentlichungsnummer: **0 060 446**
**B1**

(12) ## EUROPÄISCHE PATENTSCHRIFT

(45) Veröffentlichungstag der Patentschrift:
10.10.84

(51) Int. Cl.³: **G 01 N 13/04**

(21) Anmeldenummer: 82101665.6

(22) Anmeldetag: 04.03.82

(54) Membranosmometer.

(30) Priorität: 17.03.81 DE 3110183

(43) Veröffentlichungstag der Anmeldung:
22.09.82 Patentblatt 82/38

(45) Bekanntmachung des Hinweises auf die Patenterteilung:
10.10.84 Patentblatt 84/41

(84) Benannte Vertragsstaaten:
AT BE CH DE FR GB IT LI LU NL SE

(56) Entgegenhaltungen:
DE - A - 1 907 811
DE - A - 2 657 351
US - A - 4 028 931

(73) Patentinhaber: **Wallner, Franz, Dr.-Ing.,
Humboldstrasse 22, D-1000 Berlin 33 (DE)**

(72) Erfinder: **Wallner, Franz, Dr.-Ing., Humboldstrasse 22,
D-1000 Berlin 33 (DE)**

(74) Vertreter: **Sommer, Fritz, Dr. et al, Boehringer Ingelheim
International GmbH ZA Patente, D-6507 Ingelheim/Rhein
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Membranosmometer zur direkten Messung osmotischer Drucke gemäß dem Oberbegriff des Anspruchs 1.

Membranosmometer dienen zur Messung des osmotischen Druckes, den eine Lösung (Probenflüssigkeit) auf ihr Lösungsmittel ausübt.

Ein wichtiges Anwendungsgebiet für Membranosmometer ist die Messung des kolloidosmotischen Druckes von Blut, Serum, Plasma oder anderer Körperflüssigkeiten gegenüber isotonischer Kochsalzlösung. Durch die erfindungsgemäße Ausgestaltung soll die Anwendung solcher Geräte insbesondere in der klinischen Praxis gefördert werden, indem die Wartung und Bedienung vereinfacht, die Messung beschleunigt wird und die Fehlerquellen ausgeschaltet werden.

Es ist bekannt, die Probenkammer bzw. den zur Aufnahme der Probenflüssigkeit von der Probenkammer gebildeten Hohlraum zur Atmosphäre hin offen zu lassen. Es ist weiter bekannt, die semipermeable Membran, die die Druckmeßkammer von der Probenkammer bzw. die von diesen Kammern gebildeten Hohlräume voneinander trennt, auf der Seite der Druckmeßkammer durch eine grob flüssigkeitsdurchlässige Stütz- oder Siebplatte zu unterstützen, um die im allgemeinen weiche, dünne Membran steif zu fixieren. Es ist auch bekannt, zur Abdichtung der Druckmeßkammer und der sie zur Probenkammer bzw. zur Atmosphäre abschließenden Membran einen oder mehrere Dichtringe, z. B. O-Ringe, zu verwenden. Weiter ist bekannt, die Stützplatte zur Probenkammer hin konvex zu wölben, um das Anliegen der Membran an der Stützplatte auch ohne Vorhandensein eines osmotischen Differenzdruckes zu fördern.

Zum Zusammenhalten von Proben- und Druckmeßkammer ist es auch bekannt, einen Schraubring zu verwenden, der als Überwurfmutter über eine der Kammern gestülpt wird und in ein Außengewinde auf der anderen Kammer eingreift.

Die semipermeablen Membranen sind im allgemeinen sowohl senkrecht zur Membranfläche, als auch parallel zu dieser mehr oder weniger stark wasserdurchlässig. Bei den sogenannten asymmetrischen Membranen befindet sich die halbdurchlässige Schicht (von etwa 0,1 bis 10 μm Dicke) auf einer Seite der Membran; der Rest (von etwa 30 bis 100 μm Dicke) dient als Stützstruktur und ist in allen Richtungen absichtlich stark wasserdurchlässig. Die halbdurchlässige Schicht wird in aller Regel zur Probenkammer hin angeordnet, um das Spülen und Reinigen von der Probenflüssigkeit zu erleichtern und um z. B. den Einschluß von Eiweißen in das Stützgewebe der Membran zu vermeiden.

Die für die Funktion des Osmometers besonders wichtige Abdichtung der Druckmeßkammer muß daher zwischen der Oberseite der Membran — in der Nähe ihres äußeren Randes — und der Druckmeßkammer erfolgen. Andere Anordnungen der Dichtung sind unbefriedigend oder unbrauchbar.

Zur Erzielung größtmöglicher Volumensteifigkeit des Druckmeßraumes, von der sowohl die Meßdauer, als auch die Genauigkeit der Messung — insbesondere bei kleinen Probenmengen — abhängen, ist es wichtig, daß bei Beginn der Messung die Membran bereits möglichst eng auf ihrer Stützplatte aufliegt. Es genügt daher nicht, die Membran beim Zusammenfügen von Proben- und Druckmeßkammer durch Andrücken ungefähr senkrecht zur Membranfläche über die mehr oder weniger schwach gewölbte Stützplatte zu verformen; es muß vielmehr nach Möglichkeit eine Spannung parallel zur Membranfläche zu ihrem Rand hin erzeugt werden.

Der Erfindung liegt die Aufgabe zugrunde, mit nur einem einzigen Dichtring beim Zusammenfügen von Proben- und Druckmeßkammer des Osmometers vier Funktionen auszuführen:

a) Spannen der Membran in Richtung der Membranfläche nach außen,
b) Dichten an der der Probenkammer zugewandten Oberfläche der Membran,
c) Dichten an der Druckmeßkammer und
d) Dichten des Probenraumes gegen Auslaufen der Probenflüssigkeit.

Diese Aufgabe wird durch die im Kennzeichen des Patentanspruchs 1 angegebenen Merkmale gelöst.

In einer Ausgestaltung der Erfindung ist die Stützplatte, auf welcher die semipermeable Membran aufliegt und über deren Oberfläche sie beim Festziehen des Schraubringes gespannt wird, in bekannter Weise aus Blech hergestellt, das durch Tiefätzen perforiert ist, und ist erfindungsgemäß durch Kaltverformen gewölbt. Die Herstellung der Wölbung durch Kaltverformen (Ziehen) ist nicht nur wesentlich einfacher und billiger, als die Herstellung eines massiven Teils z. B. durch Drehen und Fräsen bzw. Bohren. Der für die Funktion des Osmometers entscheidende Vorteil der zwar gewölbten, aber dennoch sehr dünnen Stützplatte ist es, daß beim Zusammenbau des Gerätes die Gefahr des Einschlusses von Luftbläschen in den Druckmeßraum wesentlich geringer ist, als bei den bekannten massiven gewölbten Stützplatten, weil die Länge der Kanäle, in denen Bläschen aus dem Druckraum nach oben austreten können, bei der perforierten und erfindungsgemäß gewölbten Stützplatte minimal ist.

In einer weiteren Ausgestaltung des Osmometers ist die genannte Stützplatte aus einer Stahlsorte hergestellt, die nicht nur rostfrei, sondern auch gleichzeitig ferromagnetisch ist. Dadurch ergibt sich die Möglichkeit, die Stützplatte zusammen mit der semipermeablen Membran und dem Dichtring mit Hilfe eines kleinen Magneten aus der Druckmeßkammer herauszuheben; die Anordnung der erfindungsgemäßen zylindrischen Ringfläche der Druckmeßkammer, auf welcher der Dichtring aufliegt, macht ein solches Herausheben erforderlich. Da die Membran relativ häufig ausgewechselt werden muß, stellt diese Möglichkeit eine deutliche Bedienungserleichterung dar.

Die Vorteile der erfindungsgemäßen Anordnung sind, daß allein durch den Arbeitsgang des Festziehens des Schraubringes bzw. durch das Zusammenfügen von Proben- und Druckmeßkammer die vier in der Aufgabenstellung genannten Funktionen a) bis d) (siehe oben) ausgeführt werden, ohne daß an die Fertigungstoleranzen der beteiligten Teile besonders hohe Ansprüche gestellt werden müssen. Bemerkenswert ist besonders die dabei erzielte hohe Dichtigkeit der Abdichtung zwischen Membranoberfläche und Druckmeßkammer, welche für die Messung von entscheidender Bedeutung ist. Weiterhin ist es vorteilhaft, daß bei der erfindungsgemäßen Anordnung der Einschluß kleiner Luftbläschen unter der Stützplatte und unter dem Dichtring leicht zu vermeiden ist, wodurch die Meßsicherheit ebenfalls erhöht wird und das richtige Zusammenbauen des Osmometers nach dem Austauschen der semipermeablen Membran auch für wenig geübte Benutzer erleichtert wird.

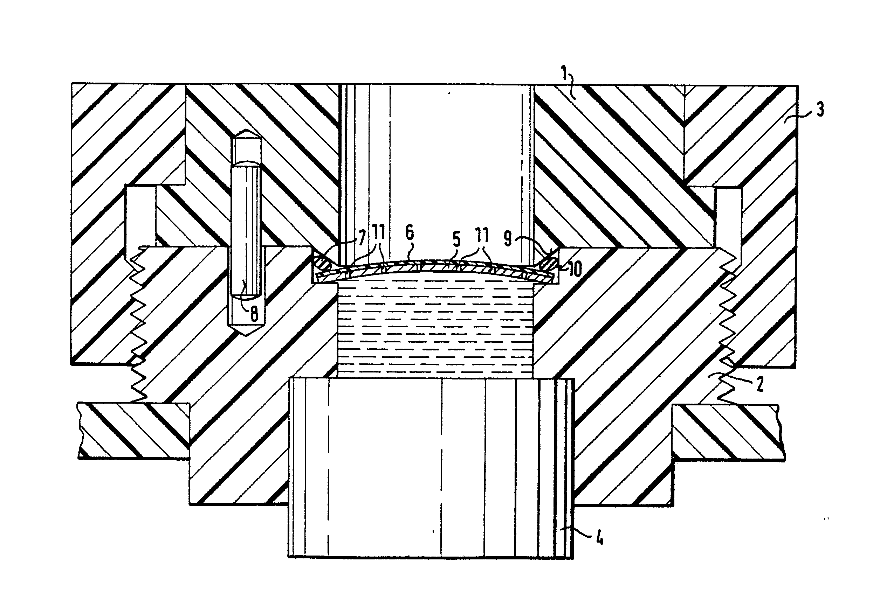

Ein Ausführungsbeispiel ist in der Zeichnung dargestellt. Die Druckmeßkammer 2, in welche der Druckaufnehmer 4 dicht eingesetzt ist, wird von dem Schraubring 3 mit der Probenkammer 1 zusammengehalten. Ein oder mehrere Paßstifte 8 verhindern beim Festziehen des Schraubringes das Verdrehen der Probenkammer gegenüber der Druckmeßkammer. Der Druckmeßraum innerhalb der Druckmeßkammer 2, der gasblasenfrei mit Lösungsmittel gefüllt sein muß, wird von dem nach außen offenen Raum in der Probenkammer 1, in den die Probenflüssigkeit eingefüllt wird, durch die semipermeable Membran 6 getrennt. Die Stützplatte 5 sorgt dafür, daß die weiche Membran sich unter dem osmotischen Differenzdruck nicht durchbiegt.

Die kegelige oder kegelähnliche Fläche 9 der Probenkammer 1 zusammen mit dem Dichtring 7 bewirkt beim Festziehen des Schraubringes die in der Aufgabenstellung (siehe oben) unter a) bis d) genannten Funktionen. Dabei sind für die richtige osmotische Druckmessung entscheidend die Funktionen a) bis c), nämlich das Spannen der Membran nach außen zur Verringerung der Volumenelastizität des Druckmeßraums, und das Dichten zwischen der Oberfläche der Membran und der zylindrischen Ringfläche 10 der Wand der Druckmeßkammer 2. An diese Dichtfunktion müssen besonders hohe Ansprüche bezüglich ihrer Dichtigkeit gestellt werden. Die Dichtfunktion d) (siehe oben) zwischen der Oberseite der Membran und der kegeligen Ringfläche 9 der Probenkammer 1 verhindert lediglich das Auslaufen der Probenflüssigkeit.

Die durch Tiefätzen hergestellten Durchbrüche 11 in der Stützplatte 5, die nach dem Ätzen durch Kaltverformen gewölbt wurde, sind nur so lang, wie die Stützplatte dick ist. Dadurch ist die Gefahr, daß beim Zusammenbau Luftbläschen in einem der Durchbrüche hängen bleiben, gering; eventuell doch hängengebliebene Bläschen sind von oben leicht sichtbar, sogar noch dann, wenn die (mehr oder weniger transparente) Membran bereits auf der Stützplatte aufliegt.

Die über die Auflage der Stützplatte hochgezogene Fläche 10 der Druckmeßkammer 2 bewirkt, daß vor und beim Zusammenbau des Osmometers die Stützplatte 5, die Membran 6 und der Dichtring 7 voll vom Lösungsmittel bedeckt werden. Dadurch wird der Einschluß von Luftbläschen unterhalb der genannten Teile sicher verhindert.

**Patentansprüche**

1. Membranosmometer zur direkten Messung osmotischer Drucke, mit einer Druckmeßkammer zu Aufnahme des reinen Lösungsmittels, einer von dieser getrennten, vorzugsweise zur Atmosphäre offenen Probenkammer zur Aufnahme der zu untersuchenden Lösung und einer auf einer grob flüssigkeitsdurchlässigen Stützplatte auf der Seite zur Probenkammer hin aufliegenden semipermeablen Membran, dadurch gekennzeichnet, daß die Probenkammer (1) an ihrer der Membran (6) zugewandten Seite eine kegelige oder kegelähnliche Ringfläche (9) besitzt, welche beim Zusammenfügen von Probenkammer (1) und Druckmeßkammer (2) einen gummielastischen oder elastisch-plastischen Dichtring (7) mit vorzugsweise Kreisquerschnitt sowohl an die der Probenkammer zugewandte Oberfläche der Membran (6), als auch an eine vorzugsweise zylindrische Innenfläche (10) der Druckmeßkammer (2) anpreßt.

2. Membranosmometer nach Anspruch 1, dadurch gekennzeichnet, daß die Stützplatte (5) zur Probenkammer (1) hin gewölbt ist.

3. Membranosmometer nach Anspruch 1, dadurch gekennzeichnet, daß die Stützplatte (5) aus Metallblech vorzugsweise aus einer nichtrostenden, jedoch ferromagnetischen Stahllegierung hergestellt ist.

4. Membranosmometer nach Anspruch 1, dadurch gekennzeichnet, daß die Stützplatte (5) durch Tiefätzen perforiert und die Wölbung durch Kaltverformung hergestellt ist.

5. Membranosmometer nach Anspruch 1, dadurch gekennzeichnet, daß der Außendurchmesser des unverformten Dichtringes (7) kleiner ist, als der Durchmesser der Innenfläche (10) der Druckmeßkammer (2).

6. Membranosmometer nach Anspruch 1, dadurch gekennzeichnet, daß Probenkammer (1) und Druckmeßkammer (2) durch einen vorzugsweise konzentrisch mit den genannten zylindrischen (10) und kegeligen (9) Flächen angeordneten Schraubring (3) zusammengehalten werden.

7. Membranosmometer nach Anspruch 1, dadurch gekennzeichnet, daß Probenkammer (1) und Druckmeßkammer (2) durch Paßstifte (8) und entsprechende Bohrungen miteinander verbunden sind.

## Claims

1. A membrane osmometer for directly measuring osmotic pressures, with a pressure measuring chamber for receiving the pure solvent, a sample chamber separated from the latter and preferably open to the atmosphere for receiving the solution which is to be investigated and a semipermeable membrane abutting on a coarsely fluid-permeable support plate on the side facing the sample chamber, characterised in that the sample chamber (1) comprises on its side facing the membrane (6) a conical or conelike annular surface (9) which, when the sample chamber (1) and pressure measuring chamber (2) are fitted together, presses a rubber elastic or elastic-plastic sealing ring (7) with a preferably circular cross section against both the surface of the membrane (6) facing the sample chamber and also against a preferably cylindrical inner surface (10) of the pressure measuring chamber (2).

2. A membrane osmometer as claimed in claim 1, characterised in that the support plate (5) is convex towards the sample chamber (1).

3. A membrane osmometer as claimed in claim 1, characterised in that the support plate (5) is made of sheet metal, preferably a rustproof but ferromagnetic steel alloy.

4. A membrane osmometer as claimed in claim 1, characterised in that the support plate (5) is perforated by deep etching and the convexity is produced by cold forming.

5. A membrane osmometer as claimed in claim 1, characterised in that the outer diameter of the unformed sealing ring (7) is smaller than the diameter of the inner surface (10) of the pressure measuring chamber (2).

6. A membrane osmometer as claimed in claim 1, characterised in that the sample chamber (1) and pressure measuring chamber (2) are held together by a screw ring (3) which is preferably arranged concentrically with the above-mentioned cylindrical (10) and conical (9) surfaces.

7. A membrane osmometer as claimed in claim 1, characterised in that the sample chamber (1) and pressure measuring chamber (2) are connected to each other by dowel pins (8) and corresponding bores.

## Revendications

1. Osmomètre à membrane pour la mesure directe de pressions osmitiques avec une chambre de mesure de la pression pour la réception du solvant pur, une chambre à échantillon séparée de celle-ci, de préférence ouverte sur l'atmosphère, pour la réception de la solution à étudier et une membrane semi-perméable reposant sur une plaque de support grossièrement perméable aux liquides du côté de la chambre à échantillon, caractérisé en ce que la chambre à échantillon (1) possède sur son côté tourné vers la membrane (6) une surface annulaire (9) cônique ou analogue à un cône, laquelle, lors de l'assemblage de la chambre à échantillon (1) et de la chambre de mesure de la pression (2) comprime un anneau d'étanchéité (7) à élasticité caoutchouteuse ou élastico-plastique avec une section de préférence circulaire tant sur la surface de la membrane (6) tournée vers la chambre à échantillon que sur une surface intérieure (10) de préférence cylindrique de la chambre de mesure de la pression (2).

2. Osmomètre à membrane suivant la revendication 1, caractérisé en ce que la plaque de support (5) est bombée en direction de la chambre à échantillon (10).

3. Osmomètre à membrane suivant la revendication 1, caractérisé en ce que la plaque de support (5) est fabriquée en une tôle métallique, de préférence en un alliage d'acier inoxydable, mais ferromagnétique.

4. Osmomètre à membrane suivant la revendication 1, caractérisé en ce que la plaque de support (5) est perforée par décapage profond et en ce que le bombement est réalisé par formage à froid.

5. Osmomètre à membrane suivant la revendication 1, caractérisé en ce que le diamètre extérieur de l'anneau d'étanchéité (7) non déformé est plus petit que le diamètre de la surface interne (10) de la chambre de mesure de la pression (2).

6. Osmomètre à membrane suivant la revendication 1, caractérisé en ce que la chambre à échantillon (1) et la chambre de mesure de la pression (2) sont redues solidaires par un anneau fileté (3) disposé de préférence concentriquement aux surfaces cylindriques (10) et côniques (9) mentionnées.

7. Osmomètre à membrane suivant la revendication 1, caractérisé en ce que la chambre à échantillon (1) et la chambre de mesure de la pression (2) sont liées entre elles par des goujons (8) et des percements correspondants.